# EUROPEAN PATENT APPLICATION

(11) **EP 4 465 226 A1**
(43) Date of publication of application: **20.11.2024**
(21) Application number: 24176414.1
(22) Date of filing: 16.05.2024
(51) Int. Cl.: G06Q 10/30, G06Q 30/0208

(54) **METHOD AND RELATIVE SYSTEM OF RECYCLING OF GOODS AND PRODUCTS IN GENERAL**

(30) Priority: 18.05.2023 IT 202300010080
(71) Applicant: Andorlini Tommaso Maria, 50132 Firenze (IT)
(72) Inventor: Andorlini, Tommaso Maria, 50132 Firenze (IT)
(74) Representative: Emmi, Mario

(57) **Abstract**

The present invention relates to a method which comprises the following steps:
- Producing a product;
- Generating an NFT associated with the product and with the subject who buys the product;
- Returning the product at the end of its life and/or of its use;
- And wherein, after returning, an operation of identifying the product and of the subject owner of the product through said NFT data is comprised;
- Recycling at least partially materials constituting the product or regeneration of the product.

## Description

### Scope of the invention

The present invention concerns the technical field of consumption of goods and the possibility of encouraging recycle or anyway at least partial recovery of these goods.

In particular, the invention relates to an innovative architecture, and relative method, which favors recycle or partial recovery of goods at the end of their use and/or useful lifespan.

### Brief outlines of the known art

It is known that the purchase of goods in general, such as clothing products like shoes or other types of products, is obviously a daily occurrence for any person.

Many people purchase goods online and others purchase goods directly in stores.

In any case, billions of products are purchased and used daily by people.

They range from goods of first necessity to clothing products etc.

Having said that, it is clear that many of these products, for example shoes, clothing, etc. will end their lifespan. Shoes, for example, are worn out after their use given that the sole is scuffed, and also further parts of the shoe may be damaged and/or worn out.

In any case, at the end of their use, shoes, as well as many other products, are thrown away as undifferentiated material.

On the contrary, it is clear that many of these products are constituted by material which, in some way, may be recovered and for example reused by entering a recovery supply chain.

Nowadays the need to recover materials in general and to possibly reuse them (see plastics for example) is much felt just with the purpose of being capable of fully reducing environmental impact.

Although some types of products are recycled by means of waste sorting, it is subject to the free actions of individual persons, and it is not always encouraged and/or followed. Then it is typically applied to products which derive especially from food in general.

Collection containers are known for products such as clothing and/or shoes destined for charity, but this collection is not encouraged at all and, in addition, it also requires leaving products still usable and complete into the containers in order to donate them to needy people. Thus, a collection of unusable products at the end of their lifespan is not provided.

Currently, technical solutions which provide a suitable response to said issue or which may encourage the solution seem not to be known, in particular concerning broad recycling of goods.

In particular, at the moment a solution which encourages recovery of materials deriving from products at the end of their lifespan seems not to be present, in particular (but not only) products relative to clothing in general such as clothes or shoes.

The publication US2022/300950 is further known.

### Summary of the invention

Therefore, the aim of the present invention is to provide a method, and relative system, which resolves said technical disadvantages at least partially.

In particular, the aim of the present invention is to provide a method, and relative system, which encourages recovery of material deriving from products and goods in general, once they have reached the end of their lifespan, in particular for example in the field of fashion and therefore clothing, shoes and accessories in general.

These and other aims are therefore achieved with the present method, according to claim 1.

This method comprises the following steps:
- Producing a product;
- Generating an NFT associated with the product and with the subject who buys the product;
- Returning the product at the end of its life and/or of its use;
- And wherein, after returning, an operation of identifying the product through a check of data present in the NFT is comprised;
- In the event of positive result, an operation of at least partial recovery of materials constituting the product or regeneration of the product follows.

In this way, all the aforesaid technical inconveniences are solved.

In particular, this method is adapted to allow recovery of material from one or more product and/or regeneration of the product/s.

In particular, if checking after returning, through the data of NFT gives a positive result, the owner may benefit from an economic advantage or a bonus in general.

The original seller/producer regains possession of the used product and may recycle it by recovering parts thereof or regenerating it.

The owner benefits from an economic advantage, for example the user may receive cryptocurrency which may optionally choose to convert into ordinary currency through his "wallet".

In this way, smart returning of the used and worn product is encouraged, thereby resolving all the aforesaid indicated technical disadvantages.

Advantageously, the identification comprises an analysis of data present in the NFT in order to check whether the returned product corresponds to the originally sold one.

NFT data also contain data relative to the owner who may be identified. In any case, the NFT holder is considered the owner.

Advantageously, in the event of identification with positive result, the owner receives an electronic bonus, for example he may receive cryptocurrency.

Advantageously, the NFT contains a piece of or more identifying data of the product and a piece of or more identifying data of the subject who buys the product in such a way that, upon returning the product, checking whether the returned product corresponds to the originally sold one and checking the ownership thereof are possible.

Advantageously, the NFT may contain at least one identifying code of the product, said code being further present in a part of the product.

Advantageously, said code may be for example printed on a point of the product.

Advantageously, the product may comprise a NFC TAG having said code.

Advantageously, a device for reading the NFC TAG may be comprised in order to check whether the code associated with said NFC TAG corresponds to the code stored in the NFT.

Advantageously, at least partial recycling and/or reuse of materials constituting the product is then provided and this operation comprises an operation of removing material/s and any regeneration or reuse.

An object of the present invention is also an assembly comprising:
- A product;
- An NFT associated with said product and with a subject buying the product;
- Means for enabling an electronic transaction of cryptocurrency to the subject who buys the product in the event of a positive result of an identification which comprises an analysis of data present in the NFT in order to check whether the returned product corresponds to the originally sold one, by checking its property;
- Recycling means suitable for enabling at least partial recycling of material constituting the product or at least partial regeneration the product.

Finally, an object of the present invention is also the use of an assembly, as described above, for encouraging recycling and/or reuse of material from one or more products in general and/or a regeneration of said product/s.

### Brief description of the drawings

Further features and advantages of the present method, and relative system according to the invention, will become more apparent from the following description of some preferred embodiments thereof, given only by way of non-limiting example, with reference to the attached drawings, wherein:
- Figure 1 shows a flowchart according to the invention;
- Figure 2 shows a further flowchart according to the invention;
- Figures 3A and 3B show an application example applied to a pair of women's heeled shoes.

### Description of some preferred embodiments

According to the invention, the well-known technology of NFT *("Non-Fungible Token"* also called non-copyable token) is used.

This technology is known per se, and it is briefly indicated here for the sake of simplicity and clarity.

An NFT may be defined as a digital content (therefore an electronic content) which represents objects in general of the real world.

Therefore, it is in the form of a unique and unrepeatable string of code on a blockchain, which contains unmodifiable information in electronic format. In this case, for example, the information about the product (therefore information associated with the product) and/or further information about the purchase transaction.

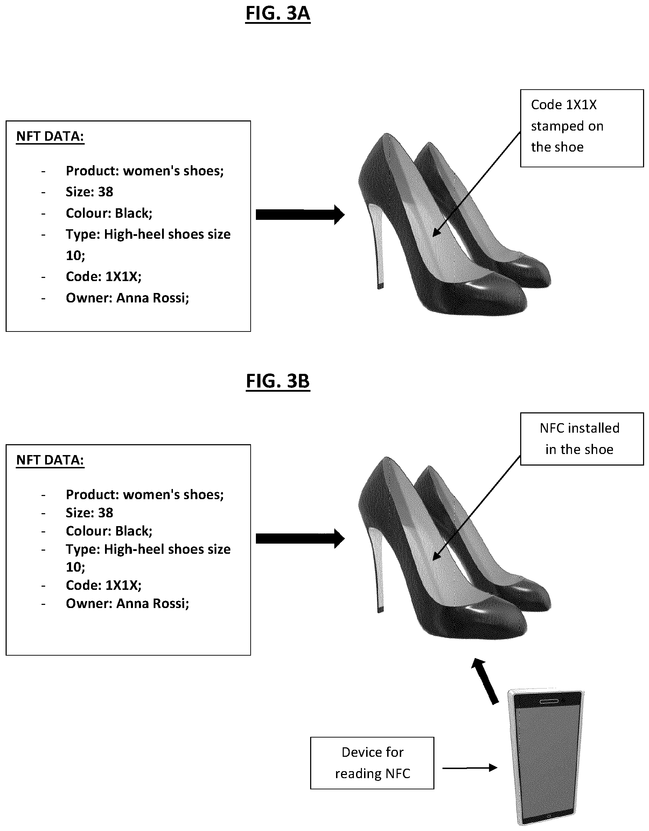

Only by way of non-limiting example, figure 3A and figure 3B show an NFT string with identifying data relative to a pair of women's heeled shoes.

As mentioned, this digital content is preferably created through blockchain technology. Therefore, blockchain technology is a structure which is based on sharing and unchangeability.

In particular, blockchain, as well known, is a shared and unchangeable register which facilitates processes of recording transactions and monitoring assets in corporate networks. An *asset* may be concrete (houses, cars, cash, lands) or abstract (intellectual property, patents, copyrights, branding). Practically anything valuable may be monitored and exchanged in a blockchain network, thus reducing risks and reducing costs for all involved parties.

Substantially, each non-fungible token (NFT) is created with a univocal inner code written on blockchain which is visible to all.

At this point, this NFT may be associated with a subject with a right of property (for example the creator himself or another subject as explained below) and his name appears inside the blockchain when it will be displayed (see the example of figure 3A and figure 3B owner = Anna Rossi).

Therefore, the NFT is unique and contains a certain amount of information inside it which is reproduced in the form of image, video or customized content.

In particular, the creation process of an NFT requires the use of cryptography, a method which allows writing information in a fully secure way and difficult to compromise.

In addition, by operating on blockchain, information and data contained inside each encrypted token are public and visible to all.

For example, an NFT may be created by creating a video or audiovisual content, by using for example suitable platforms like *"OpenSea"* and setting the parameters regarding the own collection. In few minutes, a series of non-fungible and customized token may be created.

Having said that, the invention described below is based on this NFT technology.

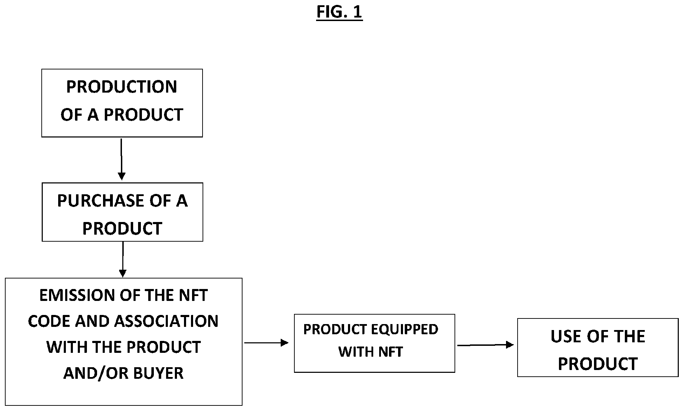

The flowchart of figure 1 shows a first part of steps.

In a first step, the product to sell on the market is produced.

The product may be any and therefore is any good, for example in the field of clothing such as shoes (see the non-limiting example of figure 3A and 3B in which the product in question is a pair of women's heeled shoes).

Upon purchasing the product, or anyway, when the product is going to be sold to an identified subject, then a step of emission of an NFT (or in other words, NFT code) follows, which is associated with the product in question and with the buyer.

Thus, the product is identified univocally through said emitted NFT, being associated with the buyer.

Moreover, said NFT may also contain data among which the purchase transaction with any further information such as purchase date and/or price.

For example, for the product:
- **NFT 123451 associated with the product "Shoe_1" purchased by Anna Rossi on 10-10-2022 at the price of Euro xxx;**

As already mentioned at the beginning, the technology of creating an NFT (in the present description also defined, as already mentioned, NFT code in an equivalent way) is well-known per se and is not the specific object of the present invention.

In any case, as mentioned above for example, an NFT code is associated with the product shoe_1 such that the shoe is univocally identified by this code and the NFT code also contains information data identifying the buyer.

Preferably, but not necessarily, the sale may occur through on-line purchases which are widely used by now, even if, obviously, the present invention may be applied to any type of purchase, also in store, and to any kind of product or good in general.

On-line sale, as well known, provides the access through the Internet to a sale platform to execute an electronic order.

Once the order has been completed, the product is sent to the address indicated by the user.

Therefore, the creation and emission of NFT occurs after the sale or contextually. The NFT is sent through an email which contains a link connected to a "wallet" to download it.

Therefore, with a practical example, a user buys a product (for example on-line in a suitable website) contextually generating an NFT created by the seller who sends it to the user by email or according to any other electronic way.

Therefore, in the event of on-line purchase, the user connects to the website through the Internet and his own electronic device (for example a PC) . He selects the product and proceeds with the payment.

At this point, an NFT is generated.

In the example of figure 3A, the purchased product is a pair of women's heeled shoes. The generated NFT is a string which has a piece of or more data adapted to identify univocally the product and the owner buying it.

Just because the NFT is created at the moment of purchase or anyway after purchase, the NFT not only contains data associated with the product but also and above all with the buyer.

Therefore, a chain of unmodifiable information is created in which the product is recognized through NFT and is associated with the buyer with any further information such as the cost and/or the purchase date.

Therefore, creating the NFT at the moment of or after purchase is necessary to associate the buyer with the product.

An NFT may indeed not be created before the purchase given that data of the buyer associated with the purchase would not be known.

The example given right now may be repeated in the event of purchase in store, even if the invention is preferably (but not necessarily) addressed to the e-commerce.

There are indeed many companies which provide a possibility to shop online with many websites which enable purchasing the relative products.

Therefore, shoes, sport stores etc. besides providing a physical location enable online purchases of products through connection to their specific website.

Therefore, according to the invention, preferably the product equipped with NFD may be purchased online. If the product is purchased in store, the same process may anyway occur by combining said NFT to the item.

Then the purchased product is obviously used.

Since the product is equipped with NFT code, it is univocally identified and identifiable by the original producer/seller together with his owner.

Therefore, according to the invention, the final user who purchased the product equipped with NFT may return the product at the end of its use to the seller or anyway to the subject who associated the product with the NFT.

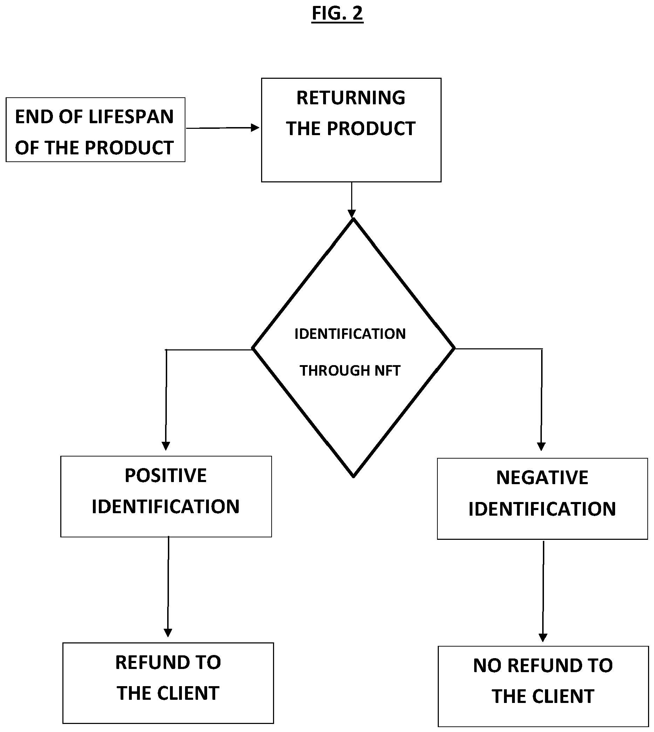

Therefore, the flowchart of figure 2 shows this further step.

In particular, both the step of end of lifespan of the product and the subsequent step of returning the product at the end of its lifespan are indicated.

In fact, thanks to the fact that the product in question has been equipped with an NFT, it is univocally identified and has a value per se, established by who achieved the NFT, that is the producer of the product or anyway the seller of the product.

Therefore, according to the flow of figure 2, the final user may return the product now.

If the product has been purchased online, it may be sent back by mail or it might be returned to the retailer, if it has been purchased in store.

In any case, a checking step of identification of the product in question occurs after having returned it.

In particular, the subject receiving the product checks whether the returned product is actually the one associated with the generated NFT.

More specifically, as already mentioned, information about the product like article, color and size are inserted into the NFT string. For example, figure 3a and 3B show some data of the product such as size, type, color, etc. Therefore, the association (i.e., check) between the product and what is contained in the NFT is also made visually without the possibility of mistake. The NFT indeed has information sufficient to recognize and identify the product.

Therefore, upon returning it, the data identifying the product contained in the NFT string allows a univocal check whether the returned physical product corresponds to the actual one originally associated with the generated NFT.

The other necessary piece of data is the owner of the NFT, and also this piece of data, as mentioned, is inserted into the NFT string upon purchasing the product (see for example figure 3A and 3B "Anna Rossi").

Therefore, one may check whether the returned product corresponds to the original one and the subject returning it is the identified subject and owner of the NFT.

For a better security regarding the original identification of the product (see figure 3A and 3B), in any case also a univocal alphanumeric code may be inserted to associate directly NFT to the physical item. In other words, the NFT may include any code (for example, alphanumeric) contained in part of the product among various information. In this way, checking whether the code present in the NFT coincides with the one contained in the product is sufficient.

In a possible variant of the invention (see specifically figure 3B), subject to the description above, a NFC tag (i.e., *"Near Field Communication")* could be inserted into the products, associated in turn with the NFT string. In this case, the corresponding chart would contain data such as: article, color, size, NFC code.

Said NFC code may be read by any smart device (same function of the POS payment with credit cards on the telephone). Therefore, substantially, the product is supplied with said NFC tag readable by suitable device and the code, once it has been read, may be comparable to the one contained in the data string of the NFT.

In other words, the created NFT may contain among various information a code or NFC associated with the product. These elements have been inserted in advance in the chart of the NFT. Therefore, the producer/seller owns the digital chart reporting which specific NFT with which code/NFC is associated the specific item.

In all the aforesaid cases, if the identification gives a positive result, the client will benefit from a return bonus, for example a return bonus for buying the NFT string again, which may be sold in blockchain by its nature.

It is clear that, this solution strongly encourages returning used objects which may be recycled accordingly.

Substantially, the purchased object is univocally identified as well as the buyer which may benefit from an economic advantage or an incentive to return it.

For example, in the event of shoes, a pair of shoes associated with the NFT string and having a univocal NFT identification code may be purchased.

At the end of their lifespan and of their use, the user may return the shoes and one may readily check whether the returned product is actually associated with the NFC code to check whether it is the original one.

If the result is positive, the client receives a bonus, also of economic type (for example a discount in a future purchase or money or preferably the user will receive cryptocurrency which may optionally convert into ordinary currency through his wallet).

In this way, each subject is encouraged to buy products in general and to return them.

The returned product, for example, the worn shoe, enters a recycle chain where it can be dismantled thus collecting the various parts which can be recycled accordingly (for example, parts of rubber, plastic, leather and the like). Therefore, the recovery material may enter a recycle chain.

Alternatively, the product may be reconditioned to be put again on the market or donated. In any case, anyway, extending its lifespan and decreasing its environmental impact.

The described method works well also in the event wherein the subject who bought the product (or object in other words) sells it in turn as second-hand product to another subject which then will be able to benefit from the described return service.

Independently from the passages of ownership, indeed, the NFT associated with the relative object remains valid, thereby who has the NFT and the object has the right to collect the attributed value after having returned the object.

## Claims

1. A method which comprises the following steps:
- Producing a product;
- Generating an NFT associated with the product and with a subject who buys the product;
- Returning the product at the end of its life and/or of its use;
- And wherein, after returning, an operation of identifying the product through said NFT is comprised;
- And wherein, in the event of positive recognition, an operation of processing the product through at least partially recycling at least a part of materials constituting the product and/or regeneration of at least a part of the product follows.

2. The method, according to claim 1, wherein, said identification comprises an analysis of data present in the NFT in order to check whether the returned product corresponds to the originally sold one.

3. The method, according to claim 1 or 2, wherein in the event of identification with positive result, the owner receives an electronic bonus, in particular cryptocurrency.

4. The method, according to one or more of the previous claims, wherein the NFT contains a piece of or more identifying data of the product and a piece of or more identifying data of the subject who buys the product in such a way that, upon returning the product, checking whether the returned product corresponds to the originally sold one and checking the ownership thereof are possible.

5. The method, according to one or more of the previous claims, wherein the NFT contains at least one identifying code of the product, said code being further present in the product; preferably said code is stamped on a point of the product.

6. The method, according to one or more of the previous claims, wherein the product comprises a NFC TAG having said code.

7. The method, according to one or more of the previous claims, wherein a device for reading the NFC TAG is comprised in order to check whether the code associated with said NFC TAG corresponds to the code stored in the NFT.

8. The method, according to one or more of the previous claims, wherein said at least partial recycling and/or reuse of materials constituting the product comprises an operation of removing material/s and any regeneration or reuse.

9. The method, according to one or more of the previous claims, wherein at the moment of electronic generation of the NFT, said NFT is electronically sent to the subject who buys the product.

10. An assembly comprising:
- A product;
- An NFT associated with said product and with a subject buying the product;
- Means for enabling an electronic transaction of cryptocurrency to the subject who buys the product when the product has been returned, in the event of a positive result of an identification which comprises an analysis of data present in the NFT in order to check whether the returned product corresponds to the originally sold one;
- Recycling means suitable for enabling at least partial recycling of material constituting the product or at least partial regeneration of the product.

11. The use of an assembly, according to claim 10, for encouraging recycling and/or reuse of material from one or more products in general and/or a regeneration of said product/s.
